# EUROPEAN PATENT SPECIFICATION

(11) **EP 1 766 203 B1**
(45) Date of publication and mention of the grant of the patent: **17.12.2008**
(21) Application number: 05772007.0
(22) Date of filing: 07.07.2005
(51) Int. Cl.: F01N 3/023, F01N 3/035

(54) **EXHAUST GAS CONTROL APPARATUS FOR INTERNAL COMBUSTION ENGINE**
ABGASSTEUERUNGSVORRICHTUNG FÜR EINE BRENNKRAFTMASCHINE
APPAREIL DE REGULATION DE GAZ D'ECHAPPEMENT POUR MOTEUR A COMBUSTION INTERNE

(30) Priority: 09.07.2004 JP 2004203175
(43) Date of publication of application: 28.03.2007
(73) Proprietor: TOYOTA JIDOSHA KABUSHIKI KAISHA, Toyota-shi, Aichi-ken, 471-8571 (JP)
(72) Inventor: Hashizume, Takeshi, Toyota-shi, Aichi-ken 471-8571 (JP); Gotou, Isamu, Toyota-shi, Aichi-ken 471-8571 (JP); Tominaga, Hiroyuki, Toyota-shi, Aichi-ken 471-8571 (JP)
(74) Representative: TBK-Patent
(86) International application number: PCT/IB2005/001927
(87) International publication number: WO 2006/008599

(56) References cited:
- DE-A1- 10 354 276
- US-A1- 2003 167 756
- US-A1- 2003 200 745
- PATENT ABSTRACTS OF JAPAN vol. 018, no. 360 (M-1634), 7 July 1994 (1994-07-07) & JP 06 093827 A (MITSUBISHI MOTORS CORP), 5 April 1994 (1994-04-05)

## Description

### BACKGROUND OF THE INVENTION

### 1. Field of the Invention

The invention relates to an exhaust gas control apparatus for an internal combustion engine.

### 2. Description of Related Art

There is a known exhaust gas control apparatus for an internal combustion engine, which includes an oxidation catalyst and a particulate filter that is provided downstream of the oxidation catalyst and that traps particulate matter in exhaust gas, and which supplies fuel (HC) from a position upstream of the oxidation catalyst, thereby oxidizing and removing the particulate matter trapped in the particulate filter. Such a technology is disclosed in, for example, Japanese Patent Application Publication No. JP(A) 60-43113. There is another known exhaust gas control apparatus for an internal combustion engine. In this exhaust gas control apparatus, a first oxidation catalyst, which has a capacity smaller than that of a second oxidation catalyst that oxidizes the particulate matter, is provided upstream of the second oxidation catalyst, and the capacity the first oxidation catalyst having the smaller capacity is set such that a SV value (space velocity) during idling is equal to or higher than 50,000 (1/h). Such a technology is disclosed in, for example, Japanese Patent Application Publication No. JP(A) 06-093827 and US 2003/0200745 A1. Also, technologies related to the invention are disclosed in Japanese Patent Application Publication No. JP(A) 01-318715 and Japanese Patent Application Publication No.JP (A) 2004-44509.

In the exhaust gas control apparatus disclosed in Japanese Patent Application Publication No. JP(A) 60-43113, the temperature of the exhaust gas flowing in the oxidation catalyst is decreased due to heat release in an exhaust passage. As a result, the bed temperature of the oxidation catalyst may not be increased to a target temperature required for a filter recovery process. Even when the first oxidation catalyst having the smaller capacity is provided upstream of the second oxidation catalyst, as disclosed in Japanese Patent Application Publication No. JP(A) 06-093827 and US 2003/0200745 A1, if the capacity is not appropriate, the temperature of the exhaust gas (hereinafter, referred to as the "exhaust gas temperature" where appropriate) may not be sufficiently increased, and therefore the target temperature may not be achieved. In the related technologies, therefore, the region where the filter recovery process can be performed is limited to a region where the exhaust gas temperature is high.

### SUMMARY OF THE INVENTION

It is an object of the invention to provide an exhaust gas control apparatus for an internal combustion engine, which makes it possible to increase a region where a filter recovery process can be performed such that the filter recovery process can also be performed at lower loads of the internal combustion engine.

An exhaust gas control apparatus according to an aspect of the invention is applied to an internal combustion engine including a turbocharger. The exhaust gas control apparatus includes an upstream side oxidation catalyst which is provided downstream of a turbine of the turbocharger; a downstream side oxidation catalyst which is provided downstream of the upstream side oxidation catalyst; a particulate filter which is provided downstream of the downstream side oxidation catalyst; and fuel supply means for supplying fuel required for a filter recovery process for oxidizing and removing particulate matter accumulated in the particulate filter. The capacity of the upstream side oxidation catalyst (13) is set such that a space velocity (SV) during idling of the internal combustion engine (2) is equal to or higher than 58,000 (1/h) and equal to or lower than 175,000 (1/h).

In the exhaust gas control apparatus according to the aspect of the invention, the capacity of the upstream side oxidation catalyst may be set such that the space velocity (SV) during idling of the internal combustion engine is equal to or higher than 58,000 (1/h). As the capacity of the upstream side oxidation catalyst becomes larger, the exhaust gas temperature can be made higher. However, as the exhaust gas temperature becomes higher, the amount of heat release (heat loss) increases. As a result, the bed temperature of the downstream side oxidation catalyst may not be increased to the target temperature. According to the aspect of the invention, however, such a problem can be avoided.

When fuel (HC) required for the filter recovery process is supplied by the fuel supply means, the temperature of the exhaust gas flowing in the upstream side oxidation catalyst is increased due to an oxidation reaction of the HC, and the exhaust gas whose temperature has been increased flows in the downstream side oxidation catalyst provided downstream of the upstream side oxidation catalyst. In this case, when the capacity of the upstream side oxidation catalyst is made excessively small (the space velocity is made excessively high), even if the fuel supply amount is increased, the exhaust gas temperature is increased by only an amount corresponding to the small capacity of the upstream side oxidation catalyst. Therefore, the exhaust gas temperature cannot be sufficiently increased by the downstream side oxidation catalyst. As a result, particulate matter may not be effectively oxidized and removed. According to the aspect of invention, however, the capacity of the upstream side oxidation catalyst is appropriately set such that the space velocity (SV) during idling of the internal combustion engine is equal to or lower than 175,000 (1/h). It is therefore possible to increase the region where the filter recovery process can be performed such that the filter recovery process can also be performed at lower loads of the internal combustion engine, while minimizing the capacity of the upstream side oxidation catalyst. Note that the space velocity in the aspect of the invention is a ratio of an amount of gas flowing in the catalyst per hour (h) to the capacity of the catalyst.

In the aspect of the invention, the upstream side oxidation catalyst is provided downstream of the turbine of the turbocharger. It is therefore possible to avoid problems which may be caused by providing the upstream side oxidation catalyst upstream of the turbine, for example, deterioration of supercharging response due to insufficiency of an amount of heat supplied to the turbine, and heat deterioration of the catalyst due to exposure of the catalyst to a high temperature (equal to or higher than 700 °C).

With the above-mentioned exhaust gas control apparatus, it is possible to increase the region where the filter recovery process can be performed such that the filter recovery process can also be performed at lower loads of the internal combustion engine. Note that the capacity of the upstream side oxidation catalyst may be one-thirtieth to one-fifth of a capacity of the downstream side oxidation catalyst.

### BRIEF DESCRIPTION OF THE DRAWINGS

The above-mentioned embodiment and other embodiments, objects, features, advantages, technical and industrial significance of this invention will be better understood by reading the following detailed description of the exemplary embodiments of the invention, when considered in connection with the accompanying drawings, in which:
FIG. 1 is a view schematically showing a diesel engine to which an exhaust gas control apparatus according to the invention is applied;
FIG. 2 is a graph showing a change in exhaust gas temperature in each of three cases where upstream side oxidation catalysts having three levels of capacities are provided;
FIG. 3 is a graph showing a result of a temperature increasing performance test conducted on a comparative example in which the upstream side oxidation catalyst is not provided;
FIG. 4 is a graph showing a result of a temperature increasing performance test conducted under conditions that the capacity of the upstream side oxidation catalyst is set such that a SV is 300,000 (1/h) at an engine rotational speed of 1200 rpm; and
FIG 5 is a graph showing a result of a temperature increasing performance test conducted under conditions that the capacity of the upstream side oxidation catalyst is set such that a SV is 500,000 (1/h) at an engine rotational speed of 1200 rpm.

### DETAILED DESCRIPTION OF THE EXEMPLARY EMBODIMENTS

In the following description, the present invention will be described in more detail in terms of exemplary embodiments.

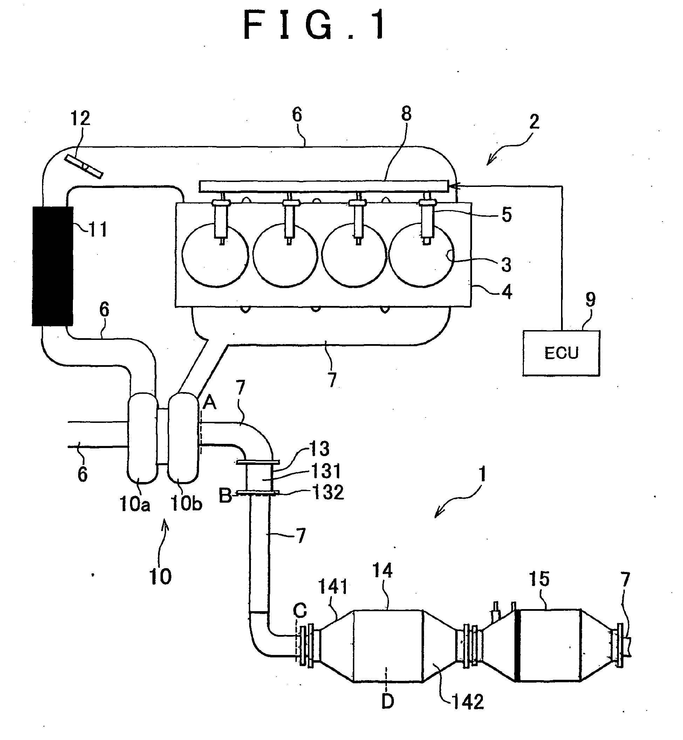

FIG 1 is a view schematically showing a diesel engine (hereinafter, simply referred to as an "engine") 2 to which an exhaust .gas control apparatus 1 according to the invention is applied. As shown in FIG 1, the engine 2 is a reciprocating four-cylinder engine. The engine 2 includes a cylinder block 4 in which cylinders 3 are formed, injectors 5 which are provided for the respective cylinders 3, and an intake passage 6 and an exhaust passage 7 which are connected to the cylinder block 4. The injectors 5, are connected to a common rail 8, and inject fuel, which has been supplied to the common rail 8 under pressure by a pressure pump (not shown) and then stored in the common rail 8, to the respective cylinders 3. An engine control unit (ECU) 9 controls an amount of fuel injected by the injectors 5, fuel injection timing, and the like.

A compressor 10a of a turbocharger 10, an intercooler 11 which cools the intake air flowing downstream of the compressor 10a, and a throttle valve 12 which adjusts an intake air amount are provided in the intake passage 6 from the upstream side toward the downstream side. A turbine 10b of the turbocharger 10, an upstream side oxidation catalyst 13, a downstream side oxidation catalyst 14, and a particulate filter (hereinafter, simply referred to as a "filter", where appropriate) 1 5 are provided in the exhaust passage 7 from the upstream side toward the downstream side. Each of the upstream side oxidation catalyst 13 and the downstream side oxidation catalyst 14 promotes oxidation reaction of HC. The filter 15 traps particulate matter in exhaust gas. The filter 15 may be coasted with a catalytic substance, for example, platinum (Pt) that promotes oxidation reaction of HC. If an amount of particulate matter accumulated in the filter 15 exceeds a permissible limit, clogging occurs. In order to avoid clogging, the accumulated particulate matter needs to be removed such that the function of the filter 15 is recovered. Accordingly, the exhaust gas control apparatus 1 causes the injectors 5 to perform in-cylinder injection, for example, post injection and fuel injection at the upper dead point (VIGOM injection), thereby supplying fuel (HC) in the exhaust passage 7. Thus, oxidation reaction with heat generation is promoted in the upstream side oxidation catalyst 13 and the downstream side oxidation catalyst 14, and therefore the temperature of the exhaust gas flowing in the exhaust passage 7 increases. The exhaust gas control apparatus 1 performs a filter recovery process in which the particulate matter accumulated in the particulate filter 15 is oxidized and removed by using the increase in the exhaust gas temperature. In this case, the injectors 5 serve as fuel supply means according to the embodiment of the invention. The ECU 9 performs various types of controls such as control of a fuel supply amount required for the filter recovery process and control of start timing/end timing of the filter recovery process. The ECU 9 may perform these controls according to known and arbitrarily employed control methods.

Each of a carrier 131 of the upstream side oxidation catalyst 13 and a carrier 141 of the downstream side oxidation catalyst 14 supports a catalytic substance, for example, platinum (Pt), which promotes oxidation reaction of HC. The carrier 131 is housed in a casing 132 such that both end surfaces of the carrier 131 face the exhaust passage 7. The carrier 141 is housed in the casing 142 such that both end surfaces of the carrier 141 face the exhaust passage 7. The structure and the material of each of the carriers 131 and 141 may be arbitrarily employed. In the embodiment, a metal carrier having a honeycomb structure, with which clogging does not occur easily, is employed. In order to reinforce the catalytic function of the upstream side oxidation catalyst 13, the amount of Pt supported by the upstream side oxidation catalyst 13 per unit capacity thereof is made larger than the amount of Pt supported by the downstream side oxidation catalyst 14 per unit capacity thereof. More particularly, the amount of Pt supported by the upstream side oxidation catalyst 13 is approximately 5 g per liter (5 g/ L), which is two to five times as large as the amount of Pt supported by the downstream side oxidation catalyst 14. The capacity of the upstream side oxidation catalyst 13 is set to be smaller than the capacity of the downstream side oxidation catalyst 14. The capacity of the upstream side oxidation catalyst 13 is set such that the space velocity (SV) during idling of the engine 1 is a value equal to or higher than 58,000 (1/h) and equal to or lower than 175,000 (1/h).

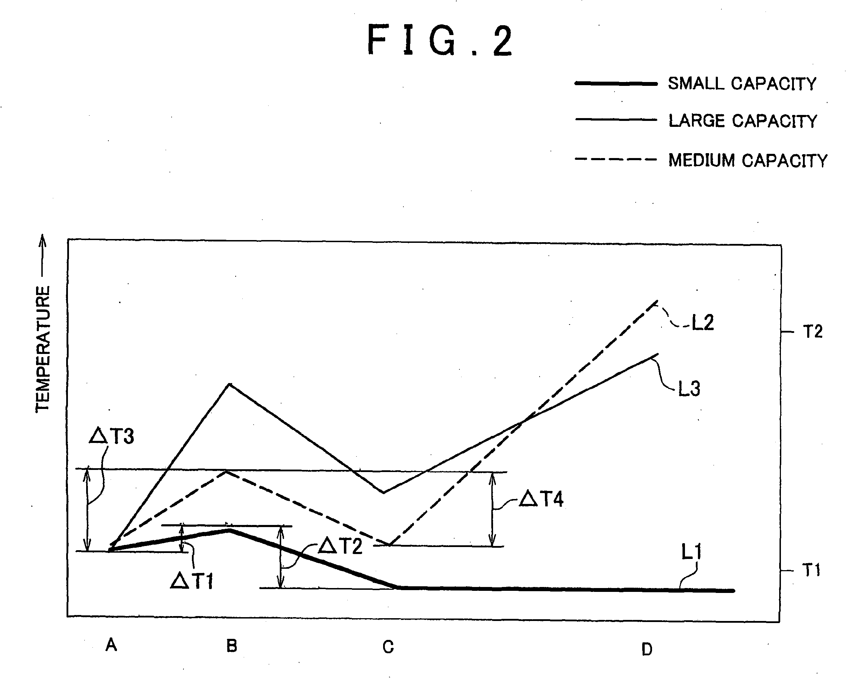

Preferably, the capacity of the upstream side oxidation catalyst 13 is made as small as possible from the viewpoints of a fitting space, cost, and the like. However, if the capacity of the upstream side oxidation catalyst 13 is made excessively small, the exhaust gas temperature cannot be increased sufficiently. Accordingly, the temperature of the exhaust gas flowing in the downstream side oxidation catalyst 14 may not be increased to a temperature at which the catalytic function of the downstream side oxidation catalyst 14 is realized (light-off temperature). As a result, the bed temperature of the downstream side oxidation catalyst 14 may not be increased to the target temperature required for the filter recovery process. Therefore, the region where the filter recovery process can be performed is limited to an operation region where the exhaust gas temperature is high. Accordingly, in the embodiment, the capacity of the upstream side oxidation catalyst 13 is decided based on the temperature changes shown in FIG. 2. In FIG 2, a reference character "A" indicates the exhaust gas temperature at an outlet of the turbocharger 10, a reference character "B" indicates the exhaust gas temperature at an outlet of the upstream side oxidation catalyst 13, a reference character "C" indicates the exhaust gas temperature at an inlet of the downstream side oxidation catalyst 14, and a reference character "D" indicates the bed temperature of the downstream side oxidation catalyst 14-(refer also to FIG 1).

As shown by a heavy solid line L1 in FIG 2, when the capacity of the upstream side oxidation catalyst 13 is excessively small, a temperature decrease amount A2 of the exhaust gas, which is an amount of decrease in the exhaust gas temperature caused between the outlet of the upstream side oxidation catalyst 13 and the inlet of the downstream side oxidation catalyst 14, is larger than a temperature increase amount ΔT1 of the exhaust gas, which is achieved by the upstream side oxidation catalyst 13. As a result, the exhaust gas temperature becomes lower than a light-off temperature T1 for the downstream side oxidation catalyst 14 before the exhaust gas reaches the inlet of the downstream side oxidation catalyst 14. Therefore, the exhaust gas temperature is not sufficiently increased in the downstream side oxidation catalyst 14. In contrast to this, as shown by a dashed line L2 in FIG 2, when the capacity of the upstream side oxidation catalyst 13 is set to a value in the optimum range (i.e., when the upstream side oxidation catalyst having a medium capacity is employed), a temperature increase amount ΔT3 is substantially equal to a temperature decrease amount ΔT4. Therefore, the exhaust gas temperature becomes higher than the light-off temperature T1, and the exhaust gas temperature can be increased to the target temperature by the downstream side oxidation catalyst 14. If the capacity of the upstream side oxidation catalyst 13 is a value in the optimum range, a decrease in the exhaust gas temperature caused between the outlet of the upstream side oxidation catalyst 13 and the inlet of the downstream side oxidation catalyst 14 can be compensated. Preferably, the capacity of the upstream side oxidation-catalyst 13 is set to be as small as possible. Hereafter, the lower limit of the capacity (the upper limit of the SV) will be described.

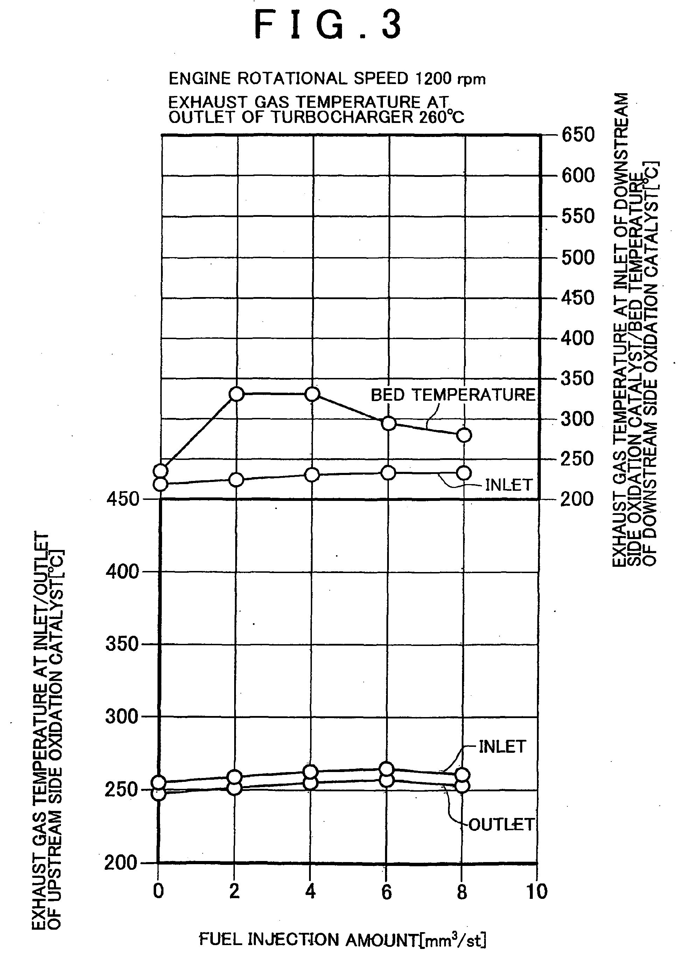

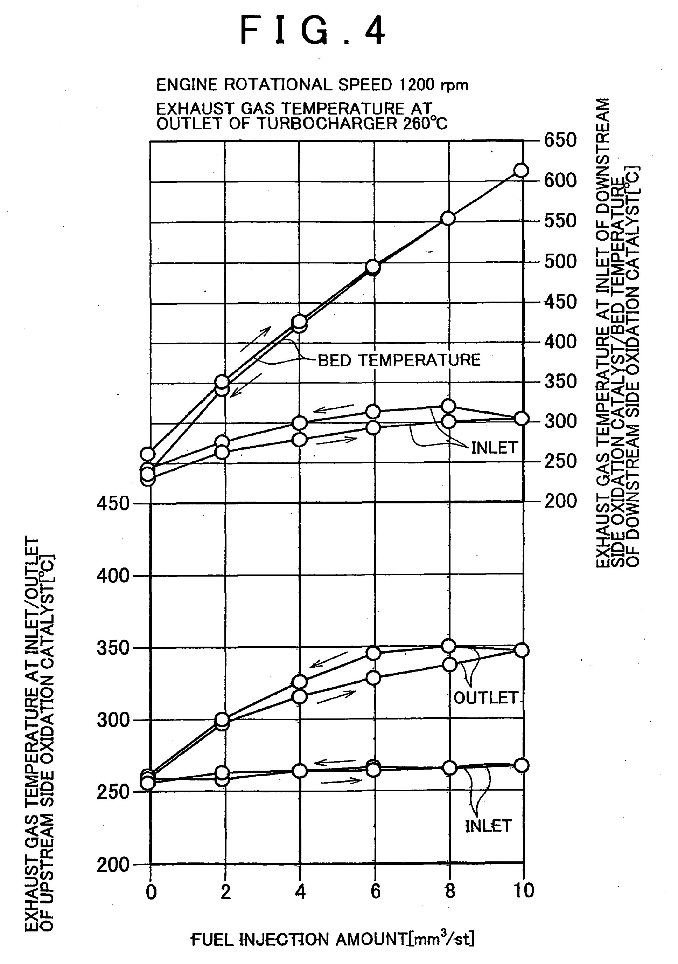

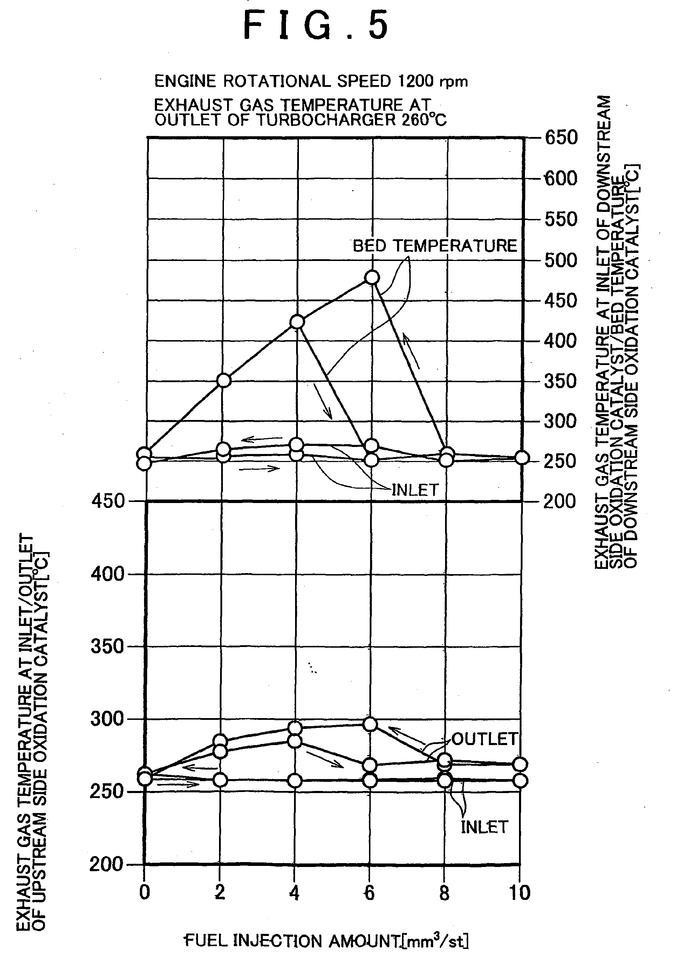

Each of FIGS. 3 to 5 indicates the result of the temperature increase performance test. This test is performed at various amounts of fuel injected by the injector 5. In this test, post injection is performed so as to inject fuel in the cylinders 3, under the conditions that the exhaust gas temperature is 260 °C at the outlet of the turbocharger 10, and the rotational speed of the engine 1 is 1200 rpm - 25 Nm. FIG 3 indicates the result of test conducted on a comparative example in which the upstream side oxidation catalyst 13 is not provided. FIGS. 4 and 5 indicate the results of tests conducted on the examples in which the upstream side oxidation catalysts having different capacities are provided. In each of FIGS. 3, 4 and 5, the horizontal axis indicates the amount of fuel injected by the post injection (mm³/st), and the vertical axis indicates the exhaust gas temperatures (°C), which are obtained at the inlet and the outlet of the upstream side oxidation catalyst 13, and the exhaust gas temperature obtained at the inlet of the downstream side oxidation catalyst 14 and the bed temperature (°C) of the downstream side oxidation catalyst 14, for the respective fuel injection amounts. The exhaust gas temperature at the inlet of the upstream side oxidation catalyst 13 in FIG 3 indicates the exhaust gas temperature obtained at the position corresponding to the inlet of the upstream side oxidation catalyst 13 in each of Fig. 4 and 5. The exhaust gas temperature at the outlet of the upstream side oxidation catalyst 13 in FIG 3 indicates the exhaust gas temperature obtained at the position corresponding to the outlet of the upstream side oxidation catalyst 13 in each of FIGS. 4 and 5. The curved line with a rightward arrow indicates the result of test in which the fuel injection amount is increased. The curved line with a leftward arrow indicates the result of test in which the fuel injection amount is decreased.

As is clear from FIG. 3, when the upstream side oxidation catalyst 13 is not provided, heat of the exhaust gas is released through the exhaust passage 7 while the exhaust gas flows from the outlet of the turbocharger 10 to the inlet of the downstream side oxidation catalyst 14. Accordingly, the exhaust .gas temperature cannot be maintained at a temperature equal to or higher than the light-off temperature for the downstream side oxidation catalyst 14. Therefore, the bed temperature of the downstream side oxidation catalyst 14 cannot be increased to a temperature equal to or higher than the target temperature (600 °C in the embodiment) at which the particulate matter can be sufficiently oxidized in the filter 15, even if the fuel injection amount is increased so as to increase the fuel supply amount. Accordingly, the filter recovery process can be performed only in the operation region where the exhaust gas temperature is sufficiently high (for example, the region where the exhaust gas temperature is equal to or higher than 280 °C).

In contrast to this, in the case shown in FIG 4, the exhaust gas temperature is increased by the upstream side oxidation catalyst 13. Therefore, the exhaust gas temperature is equal to or higher than the light-off temperature at the inlet of the downstream side oxidation catalyst 14. Accordingly, performing post injection at an appropriate fuel injection amount (10 mm³/st) makes it possible to increase the bed temperature of the downstream side oxidation catalyst 14 to the target temperature at which the filter recovery process can be performed. Thus, the region where the filter recovery process can be performed can be increased such that the filter recovery process can be also performed at lower loads. FIG 4 shows the result of test conducted under conditions that the capacity of the upstream side oxidation catalyst 13 is set such that the space velocity (SV) in the upstream side oxidation catalyst 13 is 300,000 (1/h). FIG 5 shows the result of test conducted under conditions that the capacity of the upstream side oxidation catalyst 13 is set to be smaller than that in FIG 4 (the SV is set to be higher than that in FIG 4). More particularly, the SV is 500,000 (1/h) in FIG 5. As is clear from FIG. 5, the exhaust gas temperature can be increased to some extent by the downstream side oxidation catalyst 14 until a fuel injection amount becomes a certain value (4 or 6 mm³/st). However, if the fuel injection amount exceeds the certain value, the amount of HC supplied to the upstream side oxidation catalyst 13 exceeds the amount of HC that can be caused to react with the particulate matter by the upstream side oxidation catalyst 13, and therefore the exhaust gas temperature at the outlet of the upstream side oxidation catalyst 13 decreases. Accordingly, the bed temperature of the downstream side oxidation catalyst 14 cannot be increased to the target temperature, and the filter recovery process cannot be performed. Based on the above-mentioned test results, preferably, the capacity of the upstream side oxidation catalyst 13 is set such that the SV is equal to or lower than 300,000 (1/h) at the engine speed of 1200 rpm. In terms of the SV during idling of the engine 1 (at the engine rotational speed of 700 rpm), preferably, the capacity of the upstream side oxidation catalyst 13 is set such that the SV is equal to or lower than 175,000 (1/h).

The upper limit of the capacity of the upstream side oxidation catalyst 13 (the lower limit of the SV) is set in consideration of the amount of increase in the exhaust gas temperature which is achieved by the upstream side oxidation catalyst 13 and the amount of decrease in the exhaust gas temperature which is caused between the outlet of the upstream side oxidation catalyst 13 and the inlet of the downstream side oxidation catalyst 14. Namely, as shown by a thin solid line L3 in FIG. 2, when the capacity of the upstream side oxidation catalyst 13 is large, the amount of increase in the exhaust gas temperature is also large (refer to a temperature change between A and B). However, if the amount in increase in the exhaust gas temperature becomes large the amount of heat released (heat loss) in the exhaust passage 7 increases. Therefore, the amount of decrease in the exhaust gas temperature which is caused between the outlet of the upstream side oxidation catalyst 13 and the inlet of the downstream side oxidation catalyst 14 becomes large (refer to the temperature change between B and C). As a result, the bed temperature of the downstream side oxidation catalyst 14 may not reach a target temperature T2. Accordingly, the capacity of the upstream side oxidation catalyst 13 is set such that the SV is equal to or higher than 100,000 (1/h) at the engine rotational speed of 1200 rpm, and the SV is equal to or higher than 58,000 (1/h) during idling (at the engine rotational speed of 700 rpm). Thus, the above-mentioned problem can be avoided.

Setting the capacity of the upstream side oxidation catalyst 13 in the above-mentioned manner makes it possible to increased the region where the filter recovery process can be performed such that the filter recovery process can also be performed at lower loads. The capacity of the upstream side oxidation catalyst 13 may be set to be one-thirtieth to one-fifth of the capacity of the downstream side oxidation catalyst 14. For example, when the exhaust gas temperature is 250 °C at the outlet of the turbocharger 10, and the target temperature of the filter 15 is 650 °C, the exhaust gas temperature needs to be increased by 400 °C by the upstream side oxidation catalyst 13 and the downstream side oxidation catalyst 14. In this case, if the amount of decrease in the exhaust gas temperature which is caused between the outlet of the upstream side oxidation catalyst 13 and the inlet of the downstream side oxidation catalyst 14 is 40 °C, the decrease needs to be compensated. If the capacity of the upstream side oxidation catalyst 13 is set to be one-tenth (forty-four-hundredths(40/400)) of the capacity of the downstream side oxidation catalyst 14 in order to compensate the temperature decrease, the temperature of the filter 15 can be increased to the target temperature.

The invention is not limited to the above-mentioned embodiment, and may be realized in various other embodiments. The fuel supply means is not limited as long as the fuel supply for the filter recovery process is performed at a position upstream of the upstream side oxidation catalyst 13. For example, a fuel supply injector for the filter recovery process may be provided upstream of the oxidation catalyst 13, and the filter recovery process may be performed by supplying fuel from the fuel supply injector. In this case, the fuel supply injector corresponds to the fuel supply means according to the invention.

## Claims

1. An exhaust gas control apparatus applied to an internal combustion engine (2) including a turbocharger (10), comprising:
an upstream side oxidation catalyst (13) which is provided downstream of a turbine (10b) of the turbocharger (10);
a downstream side oxidation catalyst (14) which is provided downstream of the upstream side oxidation catalyst (13);
a particulate filter (15) which is provided downstream of the downstream side oxidation catalyst (14); and fuel supply means (5) for supplying fuel required for a filter recovery process for oxidizing and removing particulate matter accumulated in the particulate filter (15),
**characterized in that**
a capacity of the upstream side oxidation catalyst (13) is set such that a space velocity (SV) during idling of the internal combustion engine (2) is equal to or higher than 58,000 1/h and equal to or lower than 175,000 1/h.

2. The exhaust gas control apparatus according to claim 1, wherein the capacity of the upstream side oxidation catalyst (13) is one-thirtieth to one-fifth of a capacity of the downstream side oxidation catalyst (14).

## Patentansprüche

1. Abgassteuerungsvorrichtung, die bei einer Brennkraftmaschine (2) mit einem Turbolader (10) eingesetzt wird, mit:
einem stromaufwärtigen Oxidationskatalysator (13), der stromabwärts von einer Turbine (10b) des Turboladers (10) vorgesehen ist;
einem stromabwärtigen Oxidationskatalysator (14), der stromabwärts von dem stromaufwärtigen Oxidationskatalysator (13) vorgesehen ist;
einem Partikelfilter (15), der stromabwärts von dem stromabwärtigen Oxidationskatalysator (14) vorgesehen ist; und
einer Kraftstoffzufuhreinrichtung (5) zum Zuführen von Kraftstoff, der für einen Filterwiederherstellungsvorgang zum Oxidieren und Entfernen von in dem Partikelfilter (15) angesammelten Partikeln benötigt wird,
**dadurch gekennzeichnet, dass**
ein Volumen des stromaufwärtigen Oxidationskatalysators (13) derart eingestellt ist, dass eine Raumgeschwindigkeit (SV) während eines Leerlaufs der Brennkraftmaschine (2) größer oder gleich 58.000 1/h und kleiner oder gleich 175.000 1/h ist.

2. Abgassteuerungsvorrichtung nach Anspruch 1, wobei das Volumen des stromaufwärtigen Oxidationskatalysators (13) ein Dreißigstel bis ein Fünftel eines Volumens des stromabwärtigen Oxidationskatalysators (14) beträgt.

## Revendications

1. Dispositif de commande de gaz d'échappement appliqué à un moteur à combustion interne (2) incluant un turbocompresseur (10), comprenant:
un catalyseur d'oxydation côté amont (13) qui est fourni en aval d'une turbine (10b) du turbocompresseur (10);
un catalyseur d'oxydation côté aval (14) qui est fourni en aval du catalyseur d'oxydation côté amont (13);
un filtre à particules (15) qui et fourni en aval du catalyseur d'oxydation côté aval (14); et un moyen d'alimentation en carburant (5) pour alimenter du carburant nécessaire pour un processus de restauration de filtre pour oxyder et enlever des matières particulaires accumulées dans le filtre à particules (15),
**caractérisé en ce que**
une capacité du catalyseur d'oxydation côté amont (13) est établie de telle sorte qu'une vitesse spatiale (SV) pendant une marche à vide du moteur à combustion interne (2) soit supérieure ou égale à 58,0001/h et inférieure ou égale à 175,000 l/h.

2. Dispositif de commande de gaz d'échappement selon la revendication 1, dans lequel la capacité du catalyseur d'oxydation côté amont (13) est de un-trentième à un-cinquième d'une capacité du catalyseur d'oxydation côté aval (14).
